# EUROPÄISCHE PATENTSCHRIFT

(11) **EP 0 968 136 B1**
(45) Veröffentlichungstag und Bekanntmachung des Hinweises auf die Patenterteilung: **27.08.2003**
(21) Anmeldenummer: 98913656.9
(22) Anmeldetag: 06.03.1998
(51) Int. Cl.: C02F 1/50, C02F 1/72, A01K 61/00

(54) **VERWENDUNG VON ALKALICARBONAT-PEROXYHYDRATEN IN DER FISCHZUCHT**
USE OF ALKALICARBONATE PEROXYHYDRATES IN FISH FARMING
UTILISATION DE PEROXYHYDRATES DE CARBONATES ALCALINS EN PISCICULTURE

(30) Priorität: 11.03.1997 DE 19709679; 21.03.1997 DE 19711810
(43) Veröffentlichungstag der Anmeldung: 05.01.2000
(73) Patentinhaber: Söll GmbH, 95028 Hof (DE)
(72) Erfinder: WILLUWEIT, Thomas, D-95028 Hof (DE); SÖLL, Peter, D-95028 Hof (DE)
(74) Vertreter: Christophersen, Ruth
(86) Internationale Anmeldenummer: EP9801266
(87) Internationale Veröffentlichungsnummer: WO98040314

(56) Entgegenhaltungen:
- WO-A-95/18070
- WO-A-96/03046
- US-A- 4 926 795
- DATABASE WPI Section Ch, Week 8051 Derwent Publications Ltd., London, GB; Class D15, AN 80-91337C XP002070774 & JP 55 142 587 A (RYONICHI KK)
- DATABASE WPI Section Ch, Week 8606 Derwent Publications Ltd., London, GB; Class C03, AN 86-040177 XP002070775 & PATENT ABSTRACTS OF JAPAN vol. 010, no. 136 (C-347), 20.Mai 1986 & JP 60 261600 A (SUMITOMO CEMENT KK; OTHERS: 01), 24.Dezember 1985,

## Beschreibung

Die vorliegende Erfindung betrifft die Verwendung von Alkalicarbonat-Peroxyhydraten zur Aufbereitung von Wässern und Sedimenten sowie in der Fischzucht.

Die Haltung von Fischen ist mit typischen Problemen behaftet. Schwankende Sauerstoffversorgung, verursacht durch hohe Besatzdichten und/oder Algenmassenentwicklungen, führt zu massiven Problemen bei den Lebewesen im Wasser.

Bei der Aufzucht von Fischen, unabhängig davon, ob sie in Teichen, in größeren Gewässern oder in Aquarien gezogen werden, kommt es häufig zu Erkrankungen, die durch pathogene Keime verursacht werden. Zu diesen Erkrankungen zählen beispielsweise Ichthyophthyrius multifiliis (Grießkörnchenkrankheit), Amöben usw.

Eine Möglichkeit, die Erkrankungen zu bekämpfen, ist der Einsatz von Malachitgrün. Malachitgrün ist jedoch ökologisch bedenklich. In Aufzuchtstationen, insbesondere in Bruthäusern, wird zur Bekämpfung von Fischerkrankungen häufig Chloramin-T eingesetzt, eine weitere Verbindung, die aus ökologischen und auch toxikologischen Gründen vorzugsweise nicht eingesetzt werden sollte.

In dem US-Patent 4,926,795 wird ein Verfahren beschrieben, worin Nicht-Schupptenfisch, wie Cat-Fisch, welcher ein unangenehmes Aroma aufweist, das für Handel unakzeptabel ist, für eine bestimmten Zeitraum in Wasser gehalten wird, dem ein anorganisches Peroxid zugesetzt wurde. Durch das Einwirkenlassen dieser wässerigen, Peroxid-haltigen Umgebung auf den Fisch soll ein annehmbares Fischaroma wiederhergestellt werden.

In der japanischen Patentanmeldung JP 55 142 587 A wird ein Verfahren zur Vermeidung der Bildung von sogenanntem "rotem Wasser' durch annormales Planktonwachstum offenbart. Natriumpercarbonat wird in einer Menge von 10 bis 100 ppm auf den befallenen Seewasserbereich aufgebracht, wodurch gemäß der Offenbarung das Plankton innerhalb kurzer Zeit abstirbt.

Aus der internationalen Patentanmeldung WO96/03046 sind mikrobizide Zusammensetzungen bekannt, die eine feste Quelle einer Persauerstoffverbindung, z. B. Natriumcarbonat-Peroxyhydrat verteilt in einer Matrix aus Polycaprolacton, enthalten. Das Aufbringen der Persauerstoffverbindung auf die Polymermatrix soll bewirken, daß der Wirkstoff gezielt dosiert und gegebenenfalls mit einer Verzögerung freigesetzt wird.

Der vorliegenden Erfindung lag somit die Aufgabe zugrunde, ein ökologisch unbedenkliches und kostengünstiges Mittel zur Verfügung zu stellen, womit sowohl ein akuter Sauerstoffmangel beseitigt wird, als auch eine vorbeugende Wirkung gegen Infektionen und Erkrankungen, wie zur Bekämpfung von pathogenen Keimen, erzielt werden kann.

Gegenstand der vorliegenden Erfindung ist demgemäß die Verwendung von Alkalicarbonat-Peroxyhydraten zur sauerstoffliefernden, neutralisierenden und entkeimenden Aufbereitung von Wässern in Süß- als auch Seewasseranlagen, natürlichen Gewässern, Fischaufzuchtstationen einschließlich deren Bruthäuser, Aquarien, offenen Gewässern, in denen die Meerestiere bzw. Fische beispielsweise in Käfigen gehalten werden, wie bei der Lachszucht, fischereitechnischen Kreislaufanlagen usw., und in diesen Gewässern befindlichen Sedimenten, wobei die Alkalicarbonat-Peroxyhydrate in Kombination mit einem Gemisch aus Erdalkalicarbonat, anderen Erdalkalisalzen und Alkalicarbonaten eingesetzt werden.

Unter Wässer im Sinne dieser Erfindung werden sowohl Süß- als auch Seewasseranlagen, natürliche Gewässer, Fischaufzuchtstationen einschließlich deren Bruthäuser, Aquarien, offene Gewässer, in denen die Meerestiere bzw. Fische beispielsweise in Käfigen gehalten werden, wie bei der Lachszucht, fischereitechnische Kreislaufanlagen usw. verstanden. Zu den Sedimenten zählen insbesondere die in den Gewässern befindlichen festen Bestandteile am Gewässergrund.

Es wurde gefunden, daß die Alkalicarbonat-Peroxyhydrate die pathogenen Keime in Wässern wirksam bekämpfen, d.h. abtöten, wodurch die Erkrankung der Wassertiere, insbesondere der Fische, deutlich gesenkt und in vielen Fällen sogar vollständig vermieden werden kann. Zu den pathogenen Keime zählen beispielsweise Ichthyophthyrius multifiliis, Amöben, usw.

Femer wurde festgestellt, daß die Verwendung von Alkalicarbonat-Peroxyhydraten in Kombination mit einem Gemisch aus Erdalkalicarbonat, anderen Erdalkalisalzen und Alkalicarbonaten zu einer spontanen Erhöhung der Sauerstoffkonzentration im Wasser führt. Gleichzeitig wirkt das enthaltene Na₂CO₃ (Soda) neutralisierend auf im Wasser gelöste Kohlensäure und andere sauer wirkende Bestandteile, indem das Carbonat protoniert wird. Hieraus ergeben sich stabilisierende Effekte auf den pH-Wert des Wassers.

Die mit der Oxidation von organischen Bestandteilen durch das H₂O₂ einhergehende Erhöhung der Acidiät der Wassers wird durch die Carbonationen abgefangen.

Insgesamt führt die Verwendung von Alkalicarbonat-Peroxyhydraten zu einer komplexen Verbesserung der Wasserqualität und kann gleichzeitig den Rückgang von Algenmassenentwicklungen bewirken. Es wurde auch eine Erhöhung der Sichttiefe beobachtet.

Zusammenfassend erhöht die Zugabe von Alkalicarbonat-Peroxyhydraten zu sauerstoffarmen Wässem die Konzentration an Aktivsauerstoff und führt neben der Verbesserung der wasserchemischen Situation für Fische, zu einer Oxidation der Wasserinhaltsstoffe und der Abtötung von pathogenen Keimen. Die die Oxidation begleitende Versäuerungstendenz wird direkt durch das enthaltene Carbonat abgepuffert. Diese Effekte können gleichzeitig durch die erfindungsgemäße Verwendung erreicht werden, nämlich durch Einsatz von ökologisch völlig unbedenklichen und preiswerten Komponenten.

Die Alkalicarbonat-Peroxyhydrate sind Anlagerungsprodukte von Alkalicarbonaten mit H₂O₂, Na₂CO₃.xH₂O₂, beispielsweise 2 Na₂CO₃.3H₂O₂. Sie werden auch als Alkalipercarbonate bezeichnet und sind im Handel erhältlich. Es ist auch möglich, ein Gemisch aus Alkalicarbonat und H₂O₂ einzusetzen, woraus sich das Addukt in an sich bekannter Weise bildet. Sowohl aus Kostengründen als auch aus ökologischen Gründen hat sich Natriumcarbonat-Peroxyhydrat als besonders geeignet erwiesen.

Das erfindungsgemäß eingesetzte Alkalicarbonat-Peroxyhydrat kann den Wässem in relativ hohen Konzentrationen, bis nahezu zur Sättigungsgrenze, zugesetzt werden, wobei eine derartige Dosierung aus Kostengründen nicht bevorzugt ist. Eine Dosierung von 5 g bis 100 g, insbesondere von 15 g bis 60 g, bezogen auf 1m³ Wasser, hat sich als besonders wirkungsvoll, insbesondere im Hinblick auf das Verhältnis von Kosten zu Effizienz, erwiesen.

Die Alkalicarbonat-Peroxyhydrate sind insbesondere bei pH-Werten bis etwa 8,5 bis 9 wirksam.

Liegt der pH-Wert über 8,5 bis 9, so liegt in der Regel eine Störung des pH-Gleichgewichtes, d.h. der Pufferkapazität des Wassers, und auch des Calciumhaushaltes vor. Erfindungsgemäß wird bei hohen pH-Werten die Wirkung der erfindungsgemäß eingesetzten Alkalicarbonat-Peroxyhydraten durch den Zusatz eines Gemisches aus Erdalkalicarbonat, insbesondere Kalk, anderen Erdalkalisalzen und Alkalicarbonaten gesteigert.

Ein solches Gemisch enthält vorzugsweise
(A) CaCO₃,
(B) CaCl₂ und/oder Ca(NO₃)₂ und ggf. Magnesiumsalze,
(C) NaHCO₃ und ggf. KHCO₃,
wobei die Komponenten A und B in Stoffmengenverhältnissen von 0,01 : 1 bis 2 : 1 und die Komponenten B und C in Stoffmengenverhältnissen von 1 : 3 bis 2 : 1 vorliegen.

Eine solche Zusammensetzung ist in der europäischen Patentanmeldung EP-A-0 737 169 beschrieben.

Durch den erfindungsgemäßen Einsatz von Alkalicarbonat-Peroxyhydraten ist es möglich, pathogene Keime in Wässern zu vernichten. Die Wirkung der Mittel kann üblicherweise innerhalb von wenigen Tagen bis zu einigen Wochen beobachtet werden, wobei dieser Zeitraum in der Regel von Wassermenge und der Größe des Fischbestandes abhängt. Der Einsatz von 50 g/m³ 2 Na₂CO₃.3H₂O₂, in einer Aufzuchtstation für Lachse hat innerhalb von 14 Tagen eine Gesundung des Fischbestandes ergeben.

## Patentansprüche

1. Verwendung von Alkalicarbonat-Peroxyhydraten zur sauerstoffliefernden, neutralisierenden und entkeimenden Aufbereitung von Wässern in Süß- als auch Seewasseranlagen, natürlichen Gewässern, Fischaufzuchtstationen einschließlich deren Bruthäuser, Aquarien, offenen Gewässern, in denen die Meerestiere bzw. Fische beispielsweise in Käfigen gehalten werden, wie bei der Lachszucht, fischereitechnischen Kreislaufanlagen usw., und in diesen Gewässern befindlichen Sedimenten, wobei die Alkalicarbonat-Peroxyhydrate in Kombination mit einem Gemisch aus Erdalkalicarbonat, anderen Erdalkalisalzen und Alkalicarbonaten eingesetzt werden.

2. Verwendung nach Anspruch 1, **dadurch gekennzeichnet, daß** als Alkalicarbonat-Peroxyhydrat Na₂CO₃ und xH₂O₂, vorzugsweise 2Na₂CO₃.3H₂O₂, oder ein Gemisch aus Na₂CO₃ und H₂O₂ eingesetzt wird.

3. Verwendung nach Anspruch 1 oder 2, **dadurch gekennzeichnet, daß** die Alkalicarbonat-Peroxyhydrate in einer Menge von 5 g bis 100 g, bezogen auf 1m³ Wasser, eingesetzt werden.

4. Verwendung nach einem der Ansprüche 1 bis 3, **dadurch gekennzeichnet, daß** das zusätzliche Gemisch,
(A) CaCO₃,
(B) CaCl₂ und/oder Ca(NO₃)₂ und ggf. Magnesiumsalze,
(C) NaHCO₃ und ggf. KHCO₃,
enthält, wobei die Komponenten A und B in Stoffmengenverhältnissen von 0,01 : 1 bis 2 : 1 und die Komponenten B und C in Stoffmengenverhältnissen von 1 : 3 bis 2 : 1 vorliegen,
eingesetzt wird.

5. Verwendung nach einem der Ansprüche 1 bis 4, **dadurch gekennzeichnet, daß** die pathogene Keimen in Wässem bekämpft werden.

6. Verwendung nach einem der Ansprüche 1 bis 5, **dadurch gekennzeichnet, daß** die pathogenen Keime von Ichthyophthyrius multifiliis, Amöben, usw. sind.

## Claims

1. Use of alkali metal carbonate peroxyhydrates for the oxygenating, neutralizing and sterilizing treatment of water in freshwater and saltwater systems, natural watercourses, fish breeding stations including their breeding rooms, in aquaria, open water in which the sea animals, or fish, are kept, for example in cages, as is the case in salmon breeding, in circulating systems used in fishery and the like, and sediments present in such bodies of water, the alkali metal carbonate peroxyhydrates being employed in combination with a mixture of alkaline earth metal carbonate, other alkaline earth metal salts and alkali metal carbonates.

2. Use according to Claim 1, **characterized in that** Na₂CO₃ and xH₂O₂, preferably 2Na₂CO₃.3H₂O₂, or a mixture of Na₂CO₃ and H₂O₂ is employed as the alkali metal carbonate peroxyhydrate.

3. Use according to Claim 1 or 2, **characterized in that** the alkali metal carbonate peroxyhydrates are employed in an amount of from 5 g to 100 g based on 1 m³ of water.

4. Use according to one of Claims 1 to 3, **characterized in that** the additional mixture contains
(A) CaCO₃,
(B) CaCl₂ and/or Ca(NO₃)₂ and, if appropriate, magnesium salts,
(C) NaHCO₃ and, if appropriate, KHCO₃,
where components A and B are present in molar ratios of from 0.01:1 to 2:1 and components B and C are present in molar ratios of from 1:3 to 2:1.

5. Use according to one of Claims 1 to 4, **characterized in that** the pathogenic microorganisms in water are controlled.

6. Use according to one of Claims 1 to 5, **characterized in that** the pathogenic microorganisms belong to Ichthyophthyrius multifillis, amoebae and the like.

## Revendications

1. Utilisation de peroxyhydrates de carbonates alcalins, pour un traitement oxygénant, neutralisant et stérilisant des eaux dans les systèmes d'eau douce ou d'eau de mer, les plans d'eaux naturels, les piscicultures, y compris leurs incubateurs, les aquariums, les cours d'eau dans lesquels les animaux marins ou les poissons sont gardés par exemple dans des cages, comme pour l'élevage du saumon, dans les circuits techniques de pêche etc. et des sédiments présents dans ces plans d'eau, les peroxyhydrates de carbonates alcalins étant mis en oeuvre en combinaison avec un mélange de carbonate alcalino-terreux, de sels alcalino-terreux et de carbonates alcalins.

2. Utilisation selon la revendication 1,
**caractérisée en ce que**
le peroxyhydrate de carbonates alcalins mis en oeuvre est Na₂CO₃ et xH₂O₂, de préférence 2Na₂CO₃.3H₂O₂ ou un mélange de Na₂CO₃ et de H₂O₂.

3. Utilisation selon l'une quelconque des revendications 1 ou 2,
**caractérisée en ce que**
les peroxyhydrates de carbonates alcalins sont mis en oeuvre dans une quantité de 5g à 100g pour 1m³ d'eau.

4. Utilisation selon l'une quelconque des revendications 1 à 3,
**caractérisée en ce que**
le mélange complémentaire contenant
(A) du CaCO₃
(B) du CaCI₂ et/ou du Ca(NO₃) et le cas échéant des sels de magnésium,
(C) du NaHCO₃ et le cas échéant du KHCO₃, est mis en oeuvre
les composantes A et B étant présentes dans des proportions de 0,01 : 1 à 2 : 1 de quantités de substances et les composantes B et C dans des proportions de 1 : 3 à 2 : 1 de quantités de substances.

5. Utilisation selon l'une quelconque des revendications 1 à 4,
**caractérisée en ce que**
les germes pathogènes dans les eaux sont traités.

6. Utilisation selon l'une quelconque des revendications 1 à 5, **caractérisée en ce que** les germes pathogènes sont issus de Ichthyophthyrius multifiliis (ichthyophthiriase), d'amibes, etc.
